Europäisches Patentamt

European Patent Office

Office européen des brevets

(19)

(11) Veröffentlichungsnummer: **0 188 836 B1**

# EUROPÄISCHE PATENTSCHRIFT

(12)

(45) Veröffentlichungstag der Patentschrift: **04.03.92**

(51) Int. Cl.⁵: **H04B 7/26**, H04Q 7/04

(21) Anmeldenummer: **85202006.4**

(22) Anmeldetag: **02.12.85**

(54) **Verfahren und Einrichtung zur Nachrichtenübertragung in einem digitalen Funkübertragungssystem.**

(30) Priorität: **22.12.84 DE 3447107**

(43) Veröffentlichungstag der Anmeldung:
**30.07.86 Patentblatt 86/31**

(45) Bekanntmachung des Hinweises auf die
Patenterteilung:
**04.03.92 Patentblatt 92/10**

(84) Benannte Vertragsstaaten:
**AT BE CH DE FR GB IT LI LU NL SE**

(56) Entgegenhaltungen:
**EP-A- 0 064 686**
**EP-A- 0 210 700**
**DE-A- 2 537 683**
**FR-A- 2 534 096**
**US-A- 4 222 115**

**IEEE TRANSACTIONS ON VEHICULAR TECH-
NOLOGY, vol. VT-31, no. 4, November 1982,
pages 153-157, IEEE, New York, US; K. KI-
NOSHITA et al.: "Digital mobile telephone
system using TD/FDMA scheme"**

(73) Patentinhaber: **Philips Patentverwaltung
GmbH
Wendenstrasse 35 Postfach 10 51 49**

**W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**BE CH FR GB IT LI LU NL SE AT**

(72) Erfinder: **Grauel, Christoph, Dr.-Ing.
Drosselweg 1
W-8501 Feucht(DE)**
Erfinder: **Schmidt, Werner, Dr.-Ing.
Schrankerweg 2
W-8560 Lauf-Ödenberg(DE)**
Erfinder: **Kittel, Ludwig, Dr.-Ing.
Eichenstrasse 37
W-8501 Heroldsberg(DE)**
Erfinder: **Wellens, Ulrich, Dr.-Ing.
Tucherstrasse 16a
W-8501 Heroldsberg(DE)**

(74) Vertreter: **Peuckert, Hermann, Dipl.-Ing. et al Philips Patentverwaltung GmbH Wenden- strasse 35 Postfach 10 51 49 W-2000 Hamburg 1(DE)**

**Beschreibung**

Die Erfindung betrifft ein Verfahren zur Nachrichtenübertragung in einem digitalen Funkübertragungssystem gemäß dem Oberbegriff des Patentanspruchs 1.

Zur Nachrichtenübertragung über ein von einer Vielzahl von Teilnehmern gemeinsam benutztes Übertragungsmedium (z.B. Leitung, Funkstrecke) sind drei Grundverfahren bekannt, nämlich das Codemultiplex-Verfahren, das Frequenzmultiplex-Verfahren und das Zeitmultiplex-Verfahren.

Beim Codemultiplex-Verfahren werden beispielsweise die verschiedenen, über ein gemeinsames Übertragungsmedium geführten Nachrichten durch Basis-Modulation einem Träger aufmoduliert und das sich ergebende, im Vergleich zur Kanalbandbreite schmalbandige Signal wird durch Multiplex-Modulation mit Hilfe eines den Empfänger kennzeichnenden Codeworts auf die Kanalbandbreite spektral gespreizt. Der so entstehende Codemultiplex-Kanal (Nachrichtenübertragungskanal) ist weder in der Zeit, noch innerhalb der Bandbreite beschränkt, dafür aber bezüglich der Leistungsdichte. Die Erkennung des Signals erfolgt nicht durch zeitliche oder frequenzmäßige Selektion, sondern anhand der spektralen Codierung. Die im Codemultiplex-Kanal überlagerte Vielzahl von spektralcodierten Nachrichten werden im Empfänger anhand des diesem zugeordneten Codeworts selektiert.Für die zweistufige Modulation (Basis- und Multiplex-Modulation) werden in Funkübertragungssystemen häufig Phasenumtastung (PSK) oder Frequenzumtastung (FSK) verwendet.

Der ersten Stufe wird z.B. das digitalisierte Sprachsignal (nach A/D-Wandlung) zugeführt in welcher beispielsweise ein multiplikativer Mischer angeordnet ist. Im multiplikativen Mischer wird das zugeführte digitalisierte Sprachsignal mit einem diesem Sender zugeordneten Codewort verknüpft, wodurch eine spektrale Spreizung erfolgt. In der zweiten Modulationsstufe des Senders wird das breitbandige Signal (modulierte, binäre Zeichenfolge) in eine für die Übertragung geeignete Frequenzlage umgesetzt.

Die empfangsseitige Rückgewinnung der Nachricht erfolgt bei dem vorstehend beschriebenen Codemultiplex-Verfahren durch die Aufeinanderfolge von Basis-Demodulation und Multiplex-Demodulation. In der Basis-Demodulationsstufe erfolgt durch Multiplikation des Signals mit dem Referenzträger die Umsetzung in eine für die Multiplex-Demodulation geeignete Frequenzlage (z.B. Basisbandlage). Mit Hilfe eines im Empfänger angeordneten Codewort-Generators sowie einer Code-Synchronisationsschaltung wird die spektrale Spreizung rückgängig gemacht, nachdem das Codewort phasenrichtig auf das Empfangscodewort synchronisiert ist. Dadurch wird die vorher über das gesamte Übertragungsband spektral verteilte Signalenergie in das ursprüngliche schmale Frequenzband komprimiert, während die mit einer anderen Multiplex-Modulation in den Empfänger einlaufenden Nachbarzeichen spektral gespreizt bleiben und sich durch ein Bandpaßfilter mit einer Bandbreite entsprechend der des ungespreizten Signals unterdrücken lassen.

Die bei der Multiplex-Demodulation verbleibende systembedingte Reststörung durch die übrigen Signale ist umso geringer, je kleiner die Werte der Kreuzkorrelationsfunktionen zwischen den verwendeten Codeworten und je größer der Spreizfaktor ist. Ein von Null verschiedener Wert der Kreuzkorrelationsfunktion vermindert den Störabstand. Der Störabstand und die Synchronisationszeit werden durch die Kreuzkorrelations- und Autokorrelationsfunktion bestimmt.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Beim Zeitmultiplex-Verfahren steht jedem Teilnehmer die gesamte Bandbreite eines einzigen Funkkanals zur Verfügung, welchen der Teilnehmer nur für kurze Zeitabschnitte benutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Aus der DE-OS 25 37 683 ist ein Funkübertragungssystem mit ortsfesten Funkstationen und beweglichen Funkstationen bekannt, bei welchen verschiedene Kanalzugriffsverfahren mit asynchronem Zeitmultiplex, mit Codemultiplex und mit Frequenzmultiplex verwendet werden.

In einem Funkübertragungssystem finden Verbindungen über hindernisbehaftete, vielfach reflektierte Ausbreitungsstrecken statt. Die niedrige effektive Antennenhöhe und die notwendige Rundstrahl-Charakteristik der Antennen der beweglichen Funkstationen bewirkt, daß die Empfangsfeldstärke sich ausschließlich aus der Interferenz von Teilfeldstärken zusammensetzt, welche durch Mehrwegeausbreitungen infolge Reflektionen durch Boden, Berge, Gebäude usw. entstehen. Die von der Antenne aufgenommene Empfangsspannung wird durch die Überlagerung der Teilfeldstärken zusätzlich amplituden- und phasenmoduliert. Die reflektierten Signalkomponenten erreichen die Antenne mit unterschiedlichen Laufzeiten über verschiedene Wege. Der Einfluß der Mehrwegeausbreitung macht sich insbesondere dann bemerkbar, wenn die Laufzeitdifferenz zwischen dem direkten und dem reflektierten Signal größer ist als die halbe Zeichendauer. Die Signalvermischung, welche durch diese Mehrwegausbreitung entsteht, führt zu ortsabhängigen Amplitudenverteilungen. Die Minima dieser Amplitudenverteilung führen im Bereich kleiner Empfangsfeldstärken zu ortsabhängigen Unterschreitungen der Grenzempfindlichkeit und damit zu Verbindungsstörungen. Bei stehendem Fahrzeug ist die Fluktuation der Empfangsspannung relativ gering. Bewegt sich das Fahrzeug, so ist das Störspektrum wesentlich ausgeprägter. Die Verbindungsstörungen, deren Dauer und Häufigkeit geschwindigkeitsabhängig sind und einer Rayleigh-Verteilung entsprechen, beruhen auf einer von der Fahrstrecke abhängigen Feldstärkeverteilung, welche abhängig ist von den Reflexionskoeffizienten der Umgebung. Bei ungünstigen Ausbreitungsverhältnissen oder hohen Fahrzeuggeschwindigkeiten können Fehlerraten von weit über 1 % gemessen werden, welche kurzzeitig nahezu 50 % erreichen.

Es zeigt sich, daß durch die systembedingten Störungen das Codemultiplex-Verfahren einen geringeren Störabstand als das Zeitmultiplex-Verfahren oder das Frequenzmultiplex-Verfahren besitzt. Durch die spektrale Komprimierung der Nachrichtenenergie verbessert sich der Störabstand im Empfänger entsprechend dem Spreizfaktor (Anzahl der Codewortzeichen pro Nachrichtenzeichen). Bei der Übertragung der Nachricht von den beweglichen Funkstationen zur ortsfesten Funkstation ist die Empfangsenergie in der ortsfesten Funkstation um so kleiner, je größer die Entfernung zur beweglichen Funkstation ist. Entfernungsunterschiede mit dem Faktor 10 ergeben im Mittel Energieunterschiede von 40 dB, so daß für den hierfür erforderlichen Dynamikausgleich eine Sendeleistungsregelung in jeder beweglichen Funkstation erforderlich ist. Neben dem Nachteil des größeren Bedarfs an Bandbreite ist als weiterer Nachteil des Codemultiplex-Verfahrens im Vergleich zum Zeitmultiplex- oder Frequenzmultiplex-Verfahren der erhebliche Aufwand für die Codesynchronisation zu nennen. Dagegen treten Nachbarkanalprobleme beim Codemultiplex-Verfahren nicht auf, wie sie beim Frequenzmultiplex-Verfahren durch überlappende Frequenzbänder oder beim Zeitmultiplex-Verfahren durch sich überschneidene Zeitschlitze auftreten können. Durch die spektrale "Verteilung" der Sendeenergie wirken sich breitbandige Störer wie andere zum Summensignal überlagerte Codeworte aus, so daß sich ein Codemultiplex-System anderen Systemen frequenzmäßig unterlagern läßt.

Der Nachteil des größeren Bedarfs an Bandbreite wird in einem Funkübertragungssystem durch den Vorteil aufgewogen, daß in räumlich benachbarten Funkzellen das gleiche Frequenzband benutzt werden darf, wobei die Gesamtbandbreite - unter der Annahme, daß im Funkübertragungssystem eine größere Anzahl von beweglichen Funkstationen zugelassen sind - in der Größenordnung der Gesamtbandbreite beim Frequenzmultiplex-Verfahren liegt. Infolge des gleichen Frequenzbands läßt sich ein Funkzellenwechsel durch die bewegliche Funkstation einfach abwickeln.

Während das Codemultiplex-Verfahren gegenüber dem Frequenzmultiplex-Verfahren den Vorteil aufweist, daß mit dem gleichen Codewort Signalisierungsinformationen gleichzeitig zu allen beweglichen Funkstationen ausgestrahlt werden können, weist das Codemultiplex-Verfahren infolge der stark schwankenden Entfernungsdifferenzen zwischen beweglicher und ortsfester Funkstation, bedingt durch die großen Dämpfungsunterschiede bei der Wellenausbreitung, den Nachteil einer Leistungsregelung in jeder beweglichen Funkstation auf. Das Zeitmultiplex-Verfahren weist den Nachteil auf, daß - um bei binärer Codierung Modulationsauslöschungen weitgehend zu vermeiden - lediglich eine maximale Bitrate von ca. 50 kbit/s erreicht werden kann. Diese maximale Bitrate ist aber nicht ausreichend um eine zeitliche Verschachtelung der Signale von vielen Teilnehmern vorzunehmen, da diese Informationsmenge bereits jener von einigen wenigen Teilnehmern (2-3 Teilnehmer) entspricht.

Auch Kombinationen der vorgenannten Verfahren und deren Anwendung in einem digitalen Funkübertragungssystem sind bekannt. Beispielsweise ist in "Nachrichtentechnik, Elektronik + Telematic 38 (1984), Heft 7, Seiten 264 bis 268" ein digitales Funkübertragungssystem beschrieben, bei dem das Zeitmultiplex-Verfahren in Kombination mit dem Codemultiplex-Verfahren verwendet wird. In den Zeitkanälen zur Sprach- und/oder Datenübertragung (Komunikationskanal TCH) werden nacheinander eine Bit-Folge zur Ermittlung des Bit-Takts (Synchron), ein Rahmen-Synchronisationswort (Vorspann) und die Bit-Folge der Nachricht selbst übertragen. Die Zeitkanäle zur Nachrichtenübertragung (3x20 TCH) sind mit Organisationskanälen (3 CCH) zu einem Zeitmultiplexrahmen mit der Zeitdauer 31,5 msec. angeordnet. Soll als Nachricht das Sprachsignal übertragen werden, so kann zur Analog-/ Digitalwandlung die adaptive Deltamodulation verwendet werden. Die dabei entstehenden Nachrichtenzeichen (bit) werden im Sender mit einem Code überlagert. Es hat sich als vorteilhaft erwiesen, die einzelnen Nachrichtenzeichen in Blöcke zu je vier bit zusammen zu fassen und die so entstehenden Blöcke mit einem orthogonalen Alphabet zu spreizen. Der dabei verwendete Spreizfaktor ist ein Kompromiß, um die Vorteile der Bandspreizung mit der Forderung nach Frequenzökonomie miteinander zu vereinigen.

Allen bisher bekannten Funkübertragungssystemen ist gemeinsam, daß der Nachrichtenübertragungskanal zwischen ortsfester und beweglicher Funkstation symmetrisch ausgebildet ist, d.h. in Hin- und Rückrichtung wird das gleiche Modulationsverfahren angewandt. Es sind keine Untersuchungen darüber angestellt worden, ob nicht, bei Anwendung jeweils eines anderen Modulationsverfahrens in Hin- und Rückrichtung des Nachrichtenübertragungskanals,die vorstehend beschriebenen Nachteile vermieden werden könnten. Der Erfindung liegt die Erkenntnis zugrunde, daß in der Richtung von ortsfester Funkstation zu den beweglichen Funkstationen eine Informationsverteilung stattfindet, während in der Richtung von der beweglichen Funkstation zur ortsfesten Funkstation eine Punkt zu Punktverbindung besteht.

Der Erfindung liegt die Aufgabe zugrunde, ein Nachrichtenübertragungsverfahren anzugeben, welches eine flexible Anpassung an neue Dienste im digitalen Funkübertragungssystem ermöglicht und welches eine erhöhte Flexibilität des digitalen Funkübertragungssystems zur Folge hat.

Diese Aufgabe wird durch die Merkmale des Patentanspruchs 1 gelöst.

Das erfindungungsgemäße Verfahren weist den Vorteil auf, daß durch die Spreizmodulation in der ortsfesten Funkstation in Senderichtung (Richtung von der ortsfesten Funkstation zu den beweglichen Funkstationen) keine aufwendigen Kombiner erforderlich sind und der Leistungs- und Platzbedarf in der ortsfesten Funkstation auf einfache Art und Weise verringert werden kann. In der beweglichen Funkstation ist im Vergleich zum Frequenzmultiplex-Verfahren keine hohe Trägerbzw. Oszillatorstabilität und keine Vielzahl von Filtern erforderlich und der Aufwand für einen Synthesizer kann verringert werden.

Durch die Anwendung des Frequenzmultiplex-Verfahrens in Richtung von den beweglichen Funkstationen zu der ortsfesten Funkstation sind im Vergleich zum Zeitmultiplex-Verfahren keine Schutzzeiten zwischen den Zeitkanälen des Zeitmultiplexrahmens und keine Reichweitenbegrenzung erforderlich. In der ortsfesten Funkstation kann im Vergleich zum Codemultiplex-Verfahren der Aufwand für die Synchronisierung vermindert werden und es ist kein aufwendiger Dynamikausgleich in jeder beweglichen Funkstation erforderlich.

Ist gemäß Patentanspruch 2 jeder beweglichen Funkstation die Spreizmodulation fest zugeordnet, so kann der Schaltungsaufwand (einfachere Steuerschaltung) in der beweglichen Funkstation reduziert werden.

Das Verfahren gemäß Patentanspruch 3 weist die Vorteile einer einfachen Anpassung an veränderte Verkehrsbedingungen und geringere Anforderungen bei der Codeauswahl auf.

Wird gemäß Patentanspruch 4 für den Organisationskanal eine allen beweglichen Funkstationen gemeinsame Spreizmodulation verwendet, so kann auf einfache Art und Weise ein allen beweglichen Funkstationen gemeinsamer Organisationskanal zur Verfügung gestellt werden.

Wird das gespreizte Summensignal in einem in der ortsfesten Funkstation angeordneten HF-Leistungsverstärker verstärkt, so kann der Leistungs- und Platzbedarf hierfür verringert werden (Patentanspruch 5).

Das Verfahren gemäß Patentanspruch 6 weist den Vorteil auf, daß nichtaktive, bewegliche Funkstationen andere bestehende Verbindungen nicht stören. Ein, der Sprachpause des an der Verbindung beteiligten Teilnehmers entsprechender Anteil wird bei der Summenbildung nicht berücksichtigt.

Werden gemäß Patentanspruch 7 Funkzellen benachbarter ortsfester Funkstationen durch unterschiedliche Spreizmodulationen voneinander unterschieden, so kann eine Verteilung der Verkehrsmenge vorgenommen werden, wobei die ortsfesten Funkstationen in einem gemeinsamen Frequenzband senden können.

Das Verfahren gemäß Patentanspruch 8 weist den Vorteil auf, daß ein geringerer Spreizfaktor verwendet werden kann und somit durch eine maßvolle Spreizung die Forderung nach Frequenzökonomie erfüllt wird und geringere Probleme bei der Frequenzkoordination mit anderen Ländern oder anderen Diensten auftreten.

Beim Verfahren gemäß Patentanspruch 9 kann in der ortsfesten Funkstation im Vergleich zum Verfahren nach Patentanspruch 7 ein kleinerer Spreizfaktor verwendet werden.

Das Verfahren gemäß Patentanspruch 11 oder 12 weist den Vorteil auf, daß durch die vorgenommene Gruppenbildung in der beweglichen Funkstation, im Vergleich zu dem Frequenzmultiplex-Verfahren, lediglich nur noch eine geringere Anzahl von verschiedenen Frequenz-Kanälen schaltbar sein muß. Ist anstatt eines Synthesizers in der beweglichen Funkstation nur noch ein Quarz angeordnet, so ist die bewegliche Funkstation besonders preiswert herzustellen.

Das Verfahren gemäß Patentanspruch 13 weist die Vorteile auf, daß der Wiederholabstand der Frequenzen in umliegende Funkzellen kleiner sein kann und daß eine dynamische Frequenzverteilung möglich ist.

Das erfindungsgemäße Nachrichtenübertragungsverfahren wird im folgenden anhand in der Zeichnung dargestellter Ausführungsformen näher beschrieben und erläutert. Es zeigt:

Fig. 1       das Blockschaltbild der Einrichtungen zur Nachrichtenübertragung in Senderichtung gemäß der Erfindung und

Fig. 2      eine Ausführungsform der Einrichtung
zur Spreizmodulation.

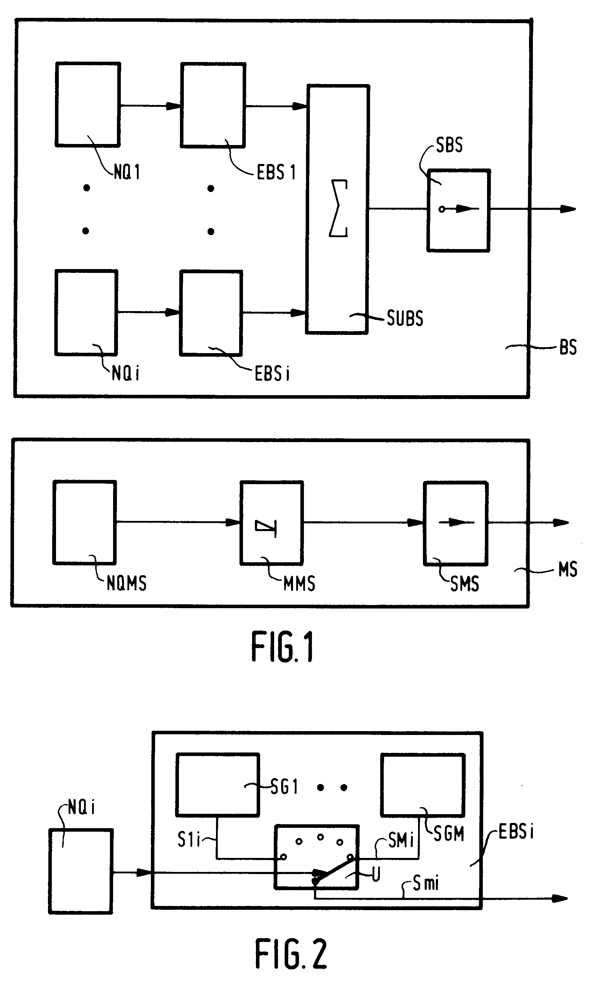

Das in Fig. 1 dargestellte digitale Funkübertragungssystem weist in einem Zellularnetz angeordnete ortsfeste Funkstationen BS und eine Vielzahl
voneinander unabhängiger beweglicher Funkstationen MS auf. Zur Nachrichtenübertragung greifen
die beweglichen Funkstationen MS auf einen aus
einer Vielzahl von Nachrichtenkanälen zu.

In der Richtung von der ortsfesten Funkstation
BS zu den dieser zugeordneten beweglichen Funkstationen MS ist jeder Nachrichtenkanal durch
Spreizmodulation gespreizt. Die gespreizten Nachrichtenkanäle werden einander überlagert und das
dadurch erhaltene breitbandige Summensignal wird
in einem gemeinsamen Frequenzband übertragen.
In der Richtung von den beweglichen Funkstationen MS zu der ortsfesten Funkstation BS erfolgt
die Nachrichtenübertragung in voneinander getrennten, schmalbandigen Frequenzkanälen. Hierbei werden die aus i verschiedenen Nachrichtenquellen NQ 1...NQi stammenden digitalen Nachrichtensignale jeweils einer Einrichtung zur Spreizmodulation EBS1...EBSi zugeführt. Die im gemeinsamen Frequenzband liegenden Ausgangssignale
der Einrichtungen zur Spreizmodulation
EBS1...EBSi werden einem Summierer SUBS zugeführt, dessen Ausgangssignal einer Sendeeinrichtung SBS zugeführt wird. Die aus einer der
beweglichen Funkstation MS zugeordneten Nachrichtenquelle NQMS stammenden Nachrichtensignale werden jeweils über einen Modulator MMS
einer in der beweglichen Funkstation MS angeordneten Sendeeinrichtung SMS zugeführt. Zur Erleichterung des Verständnisses der Erfindung sind
in Fig. 1 die jeweils zugehörigen Empfangseinrichtungen und Nachrichtensinken in der ortsfesten
Funkstation BS und beweglichen Funkstation MS
nicht eingezeichnet.

Für die Sprachübertragung, in der Richtung
von der ortsfesten Funkstation BS zu den beweglichen Funkstationen MS, wird die in der beweglichen Funkstation MS verwendete Spreizmodulation
von der ortsfesten Funkstation BS ausgewählt und
beim Verbindungsaufbau der beweglichen Funkstation MS mitgeteilt wird. Für die Übertragung von
Signalisierungen an die der ortsfesten Funkstation
BS zugeordneten beweglichen Funkstationen MS
wird, in der Richtung von der ortsfesten Funkstation
BS zu den beweglichen Funkstationen MS, eine
allen beweglichen Funkstationen gemeinsame
Spreizmodulation verwendet.

Zur Unterscheidung von in benachbarten Funkzellen angeordneten ortsfesten Funkstationen BS
senden diese, in Richtung von der ortsfesten Funkstation BS zu den beweglichen Funkstationen MS, in unterschiedlichen Frequenzbändern. In den ortsfesten Funkstationen BS sind Schmalband-Empfänger (nicht dargestellt) angeordnet, welche während
des Betriebs auf mehrere Frequenzkanäle umschaltbar sind. Die Zahl der in der beweglichen
Funkstation MS schaltbaren Sendefrequenzen ist
geringer als die Zahl der in der ortsfesten Funkstation BS schaltbaren Empfangsfrequenzen. Beispielsweise kann in der ortsfesten Funkstation BS
eine Umschaltung auf 1.000 Frequenzen und in der
beweglichen Funkstation MS eine Umschaltung auf
40 Frequenzen vorgenommen werden.

Aufgrund der Interferenzsituation werden in jeder ortsfesten Funkstation BS die dort verwendeten
Empfangsfrequenzen verwaltet. Bei Empfangsstörungen wird die betroffene Verbindung, in Richtung
von der beweglichen Funkstation MS zu der ortsfesten Funkstation BS, auf einen anderen, nicht gestörten Frequenzkanal, auf welchen sowohl die
ortsfeste Funkstation BS als auch die bewegliche
Funkstation MS umschalten kann, umgeschaltet.
Die Empfangseinrichtung in der ortsfesten Funkstation BS zum Drahtnetz der öffentlichen Fernsprechsystems hin bleibt weiterhin an der Verbindung
beteiligt.

Die in Fig. 2 dargestellte Ausführungsform einer Einrichtung zur Spreizmodulation EBSi enthält
entsprechend der Anzahl M von Stufen des digitalen Nachrichtensignals auch M Signalgeneratoren
SG1...SGM. Die Signalgeneratoren SGm (mit m =
1...M) erzeugen M verschiedene periodische Signale Smi. In Abhängigkeit von der augenblicklichen
Signalstufe m wird ein mit den Signalgeneratoren
SG1...SGM verbundener Umschalter U derart gesteuert, daß an seinem Ausgang das der Signalstufe m zugehörige Signal Smi anliegt, welches dem
Ausgang der Einrichtung zur Spreizmodulation
EBSi zugeführt wird.

**Patentansprüche**

1.      Verfahren zur Nachrichtenübertragung, insbesondere von Meldungen und Signalisierungen,
in einem digitalen Funkübertragungssystem
mit in einem Zellularnetz angeordneten ortsfesten Funkstationen (BS) und mit einer Vielzahl
voneinander unabhängiger beweglicher Funkstationen (MS), welche zur Nachrichtenübertragung auf einen aus einer Vielzahl von Nachrichtenkanälen zugreifen, dadurch gekennzeichnet, daß in der Richtung von der ortsfesten Funkstation (BS) zu den dieser zugeordneten beweglichen Funkstationen (MS) jeder
Nachrichtenkanal durch Spreizmodulation gespreizt und diese einander überlagert werden,
wobei das dadurch erhaltene breitbandige
Summensignal in einem gemeinsamen Frequenzband übertragen wird und daß in der Richtung von den beweglichen Funkstationen (MS) zu der ortsfesten Funkstation (BS) die Nachrichtenübertragung in voneinander getrennten, schmalbandigen Frequenzkanälen erfolgt.

2. Verfahren nach Anspruch 1, dadurch gekennzeichnet, daß jeder beweglichen Funkstation (MS), für die Richtung von der ortsfesten Funkstation (BS) zu der beweglichen Funkstation (MS), eine Spreizmodulation fest zugeordnet ist.

3. Verfahren nach Anspruch 1, dadurch gekennzeichnet, daß, in der Richtung von der ortsfesten Funkstation (BS) zu den beweglichen Funkstationen (MS), die in der beweglichen Funkstation (MS) verwendete Spreizmodulation von der ortsfesten Funkstation (BS) ausgewählt und beim Verbindungsaufbau der beweglichen Funkstation (MS) mitgeteilt wird.

4. Verfahren nach einem der Ansprüche 1 bis 3, dadurch gekennzeichnet, daß für die Übertragung von Signalisierungen an die der ortsfesten Funkstation (BS) zugeordneten beweglichen Funkstationen (MS), in der Richtung von der ortsfesten Funkstation (BS) zu den beweglichen Funkstationen (MS), eine allen beweglichen Funkstationen (MS) gemeinsame Spreizmodulation verwendet wird.

5. Verfahren nach Anspruch 1, dadurch gekennzeichnet, daß das Summensignal, in Richtung von der ortsfesten Funkstation (BS) zu den beweglichen Funkstationen (MS), in der ortsfesten Funkstation (BS) vor der Übertragung in einem gemeinsamen HF-Leistungsverstärker verstärkt wird.

6. Verfahren nach einem der Ansprüche 1 bis 4, dadurch gekennzeichnet, daß, in Richtung von der ortsfesten Funkstation (BS) zu den beweglichen Funkstationen (MS), während Sprachpausen bewegliche Funkstationen (MS) bei der Summenbildung in der ortsfesten Funkstation (BS) ausgeschlossen werden.

7. Verfahren nach Anspruch 1, dadurch gekennzeichnet, daß in benachbarten Funkzellen angeordnete ortsfeste Funkstationen (BS) in Richtung von dieser zu den beweglichen Funkstation (MS) in einem gemeinsamen Frequenzband senden, wobei die ortsfesten Funkstationen (BS) sich durch unterschiedliche Spreizmodulationen voneinander unterscheiden.

8. Verfahren nach Anspruch 1, dadurch gekennzeichent, daß in benachbarten Funkzellen angeordnete ortsfeste Funkstationen (BS) in Richtung von dieser zu den beweglichen Funkstationen (MS) in unterschiedlichen Frequenzbändern senden.

9. Verfahren nach Anspruch 1, dadurch gekennzeichnet, daß in benachbarten Funkzellen angeordnete ortsfeste Funkstationen (BS) zueinander zeitlich synchronisiert sind und daß die Nachrichtenübertragung, in Richtung von der ortsfesten Funkstation (BS) zu den beweglichen Funkstationen (MS), in Zeitkanälen erfolgt.

10. Verfahren nach Anspruch 1, dadurch gekennzeichnet, daß als Spreizmodulation eine binäre Spreizkodierung verwendet wird.

11. Verfahren nach Anspruch 1, dadurch gekennzeichnet, daß in der ortsfesten Funkstation (BS) angeordnete Schmalband-Empfänger während des Betriebs auf mehrere Frequenzkanäle umschaltbar sind.

12. Verfahren nach Anspruch 11, dadurch gekennzeichnet, daß die Zahl der in der beweglichen Funkstation (MS) schaltbaren Sendefrequenzen geringer ist als die Zahl der in der ortsfesten Funkstation (BS) schaltbaren Empfangsfrequenzen.

13. Verfahren nach Anspruch 11 oder 12, dadurch gekennzeichnet, daß in jeder ortsfesten Funkstation (BS) die dort verwendeten Empfangsfrequenzen verwaltet werden und gegebenenfalls bei Empfangsstörungen die betroffene Verbindung in Richtung von der beweglichen Funkstation (MS) zu der ortsfesten Funkstation (BS) auf einen anderen, nicht gestörten Frequenzkanal, auf welchen sowohl die ortsfeste Funkstation (BS) als auch die bewegliche Funkstation (MS) umschalten kann, umgeschaltet wird, wobei die zuvor benutzte Empfangseinrichtung in der ortsfesten Funkstation (BS) weiterhin an der Verbindung beteiligt ist.

14. Einrichtung zur Durchführung des Verfahrens nach Anspruch 1, dadurch gekennzeichnet, daß in der Richtung von der ortsfesten Funkstation (BS) zu den dieser zugeordneten beweglichen Funkstationen (MS) die aus i verschiedenen Nachrichtenquellen (NQ1...NQi) stammenden digitalen Nachrichtensignale jeweils einer Einrichtung zur Spreizmodulation (EBS1...EBSi) zugeführt werden, daß die in einem gemeinsamen Frequenzband liegenden Ausgangssignale (Smi) der Einrichtungen zur Spreizmodulation (EBS1...EBSi) einem Summierer (SUBS) zugeführt werden, dessen Ausgangssignal einer Sendeeinrichtung (SBS) zugeführt wird, daß in der Richtung von den beweglichen Funkstationen (MS) zu der ortsfesten Funkstaion (BS) die aus jeweils einer der beweglichen Funkstation (MS) zugeordneten Nachrichtenquelle (NQMS) stammenden Nachrichtensignale jeweils über einen Modulator (MMS) einer in der beweglichen Funkstation (MS) angeordneten Sendeeinrichtung (SMS) zugeführt werden und daß die Ausgangssignale der Sendeeinrichtungen (SMS) der beweglichen Funkstationen (MS) in voneinander getrennten, schmalbandigen Frequenzkanälen liegen.

15. Einrichtung nach Anspruch 14, dadurch gekennzeichnet, daß die Einrichtung zur Spreizmodulation (z.B. EBSi) entsprechend der Anzahl M von Stufen des Nachrichtensignals auch M Signalgeneratoren (SG1...SGM) enthält, die verschiedene periodische Signale (S1i...SMi) erzeugen und daß abhängig von der augenblicklichen Signalstufe m (m = 1...M) ein mit den M Signalgeneratoren (SG1...SGM) verbundener Umschalter (U) derart gesteuert wird, daß an seinem Ausgang das der Signalstufe m zugehörige Ausgangssignal (Smi) anliegt, welches dem Ausgang der Einrichtung zur Spreizmodulation (EBSi) zugeführt wird.

## Claims

1. Method for information transmission, more specifically, reports and signalling information, in a digital radio transmission system comprising stationary radio stations (BS) arranged in a cellular network and a plurality of mutually independent mobile radio stations (MS), which access one out of a plurality of communication channels so as to transmit messages, characterized in that each communication channel, in the direction from the stationary radio station (BS) to the mobile radio stations (MS) assigned thereto, is spread by means of spread spectrum modulation and that they are superposed on each other, the resulting wideband sum signal being transmitted in a common frequency band and in that the information transmission, in the direction from the mobile radio stations (MS) to the stationary radio station (BS), is effected over mutually separated, narrow-band frequency channels.

2. Method as claimed in Claim 1, characterized in that a spread spectrum modulation is permanently assigned to each mobile radio station (MS) for the direction from the stationary radio station (BS) to the mobile radio station (MS).

3. Method as claimed in Claim 1, characterized in that, in the direction from the stationary radio station (BS) to the mobile radio stations (MS), the spread spectrum modulation used in the mobile radio station (MS) is selected by the stationary radio station (BS) and reported to the mobile radio station (MS) during the connection set-up.

4. Method as claimed in one of the Claims 1 to 3, characterized in that for the transmission of signalling information to the mobile radio stations (MS) assigned to the stationary radio station (BS), in the direction from the stationary radio station (BS) to the mobile radio stations (MS), a spread spectrum modulation is performed for all the mobile radio stations (MS).

5. Method as claimed in Claim 1, characterized in that the sum signal, in the direction from the stationary radio station (BS) to the mobile radio stations (MS), is amplified in a common HF-power amplifier in the stationary radio station (BS) before transmission.

6. Method as claimed in one of the Claims 1 to 4, characterized in that, in the direction from the stationary radio station (BS) to the mobile radio stations (MS), mobile radio stations (MS) are excluded from the sum formation in the stationary radio station (BS) during speech intervals.

7. Method as claimed in Claim 1, characterized in that stationary radio stations (BS) located in adjacent radio cells transmit in a common frequency band in the direction from this stationary radio station (BS) to the mobile radio station (MS), the stationary radio stations (BS) being distinguished from each other by different spread spectrum modulations.

8. Method as claimed in Claim 1, characterized in that stationary radio stations (BS) located in adjacent radio cells transmit in different frequency bands in the direction from these stationary radio stations to mobile stations (MS).

9. Method as claimed in Claim 1, characterized in that stationary radio stations (BS) located in adjacent radio cells are synchronised in time with each other and in that the information transmission in the direction from the stationary radio station (BS) to the mobile radio stations (MS) is effected in time slots.

10. Method as claimed in Claim 1, characterized in that a binary spreading code is used for the spread spectrum modulation.

11. Method as claimed in Claim 1, characterized in that narrow-band receivers arranged in the stationary radio station (BS) are switchable to a plurality of frequency channels during operation.

12. Method as claimed in Claim 11, characterized in that the number of switchable transmitter frequencies in the mobile radio station (BS) is less than the number of switchable receiver frequencies in the stationary radio station (MS).

13. Method as claimed in Claim 11 or 12, characterized in that in each stationary radio station (BS) the receiver frequencies used there are managed and, optionally, in the event of reception interference, the relevant connection in the direction from the mobile radio station (MS) to the stationary radio station (BS) can be switched to a different undisturbed frequency channel, to which both the stationary radio station (BS) and the mobile radio station (MS) can be switched, the receiver arrangement used so far in the stationary radio station (BS) continuing to participate in the connection.

14. Arrangement for implementing the method as claimed in Claim 1, characterized in that in the direction from the stationary radio station (BS) to the mobile radio stations (MS) assigned thereto, the digital information signals originating from i different information signal sources (NQ1...NQi) are applied each to an arrangement for spread spectrum modulation (EBS1...EBSi), in that the output signals (SMi) located in a common frequency band, of the arrangements for spread spectrum modulation (EBS1...EBSi) are applied to an adder (SUBS) whose output signal is applied to a transmitter arrangement (SBS), in that in the direction from the mobile radio station (MS) to the stationary radio station (BS) the information signals originating from an information signal source (NQMS) assigned to the mobile station (MS) are each applied through a modulator (MMS) to a transmitter arrangement (SMS) included in the mobile radio station (MS) and in that the output signals of the transmitter arrangements (SMS) of the mobile radio stations (MS) are located in mutually separate, narrow-band frequency channels.

15. Arrangement as claimed in Claim 14, characterized in that the code-division multiplex modulation arrangement (for example, EBSi) comprises M signal generators (SG1...SGM) in correspondence to the number M of stages of the digital information signal, which generators produce several cyclic signals (SGi...SMi) and in that a reversing switch (U) connected to the M signal generators (SG1...SGM) is controlled in response to the instantaneous signal stage m (m = 1 ... M), so that the output signal (Smi) associated to the signal stage m is present at its output, which signal is applied to the output of the arrangement for spread spectrum modulation.

**Revendications**

1. Procédé de transmission de messages en particulier d'annonces et de signalisations dans un système de transmission radionumérique comportant des postes radio fixes (BS) disposés en un réseau cellulaire et un grand nombre de postes radio mobiles (MS) indépendants les uns des autres, qui, pour la transmission de messages, accèdent à l'un de plusieurs canaux de messages, caractérisé en ce que, dans le sens allant du poste radio fixe (BS) vers les postes radio mobiles (MS) qui y sont associés, les canaux de messages sont chacun étalés par modulation d'étalement, puis superposés, et le signal de somme à large bande obtenu ainsi est transmis dans une bande de fréquences commune et que, dans le sens allant des postes radio mobiles (MS) vers le poste radio fixe (BS), la transmission de messages est réalisée dans des canaux de fréquences à bande étroite séparés les uns des autres.

2. Procédé suivant la revendication 1, caractérisé en ce qu'une modulation d'étalement est associée de manière immuable à chaque poste radio mobile (MS), pour le sens allant du poste radio fixe (BS) vers le poste radio mobile (MS).

3. Procédé suivant la revendication 1, caractérisé en ce que, dans le sens allant du poste radio fixe (BS) vers les postes radio mobiles (MS), la modulation d'étalement utilisée dans le poste radio mobile (MS) est sélectionnée par le poste radio fixe (BS) et est communiquée au poste radio mobile (MS) lors de l'établissement de la liaison.

4. Procédé suivant l'une quelconque des revendications 1 à 3, caractérisé en ce que, pour la transmission de signalisations vers les postes radio mobiles (MS) associés au poste radio fixe (BS) dans le sens allant du poste radio fixe (BS) vers les postes radio mobiles (MS), une modulation d'étalement commune à tous les postes radio mobiles (MS) est utilisée.

5.  Procédé suivant la revendication 1, caractérisé en ce que, dans le sens allant du poste radio fixe (BS) vers les postes radio mobiles (MS), le signal de somme est amplifié dans le poste radio fixe (BS), avant la transmission dans un amplificateur de puissance HF commun.

6.  Procédé suivant l'une quelconque des revendications 1 à 4, caractérisé en ce que, dans le sens allant du poste radio fixe (BS) vers les postes radio mobiles (MS), pendant des pauses de parole, des postes radio mobiles (MS) sont exclus de la formation de somme dans le poste radio fixe (BS).

7.  Procédé suivant la revendication 1, caractérisé en ce que des postes radio fixes (BS) disposés dans des cellules radio voisines émettent dans une bande de fréquences commune, dans le sens allant vers le poste radio mobile (MS), les postes radio fixes (BS) se distinguant les uns des autres par des modulations d'étalement différentes.

8.  Procédé suivant la revendication 1, caractérisé en ce que des postes radio fixes (BS) disposés dans des cellules radio voisines émettent dans des bandes de fréquences différentes, dans le sens allant vers les postes radio mobiles (MS).

9.  Procédé suivant la revendication 1, caractérisé en ce que des postes radio fixes (BS) situés dans des cellules radio voisines sont synchronisés dans le temps l'un par rapport à l'autre et que la transmission de messages dans le sens allant du poste radio fixe (BS) vers les postes radio mobiles (MS), est réalisée dans des canaux temporels.

10. Procédé suivant la revendication 1, caractérisé en ce qu'à titre de modulation d'étalement, on utilise un codage d'étalement binaire.

11. Procédé suivant la revendication 1, caractérisé en ce que des récepteurs en bande étroite disposés dans le poste radio fixe (BS) peuvent être commutés sur plusieurs canaux de fréquences pendant leur fonctionnement.

12. Procédé suivant la revendication 11, caractérisé en ce que le nombre de fréquences d'émission commutables dans le poste radio mobile (MS) est inférieur au nombre de fréquences de réception commutables dans le poste radio fixe (BS).

13. Procédé suivant la revendication 11 ou 12, caractérisé en ce que, dans chaque poste radio fixe (BS), les fréquences de réception qui y sont utilisées sont gérées et, le cas échéant, lors de perturbations de réception, la liaison en question, dans le sens allant du poste radio mobile (MS) vers le poste radio fixe (BS), est commutée sur un autre canal de fréquences non perturbé sur lequel, tant le poste radio fixe (BS) que le poste radio mobile (MS) peuvent être commutés, le dispositif récepteur précédemment utilisé dans le poste radio fixe (BS) continuant dans ce cas à participer à la liaison.

14. Dispositif pour l'exécution du procédé suivant la revendication 1, caractérisé en ce que, dans le sens allant du poste radio fixe (BS) vers les postes radio mobiles (MS) qui y sont associés, les signaux de messages numériques provenant de i sources de messages (NQ1, ..., NQi) différentes sont chaque fois appliqués à un dispositif pour la modulation d'étalement (EBS1, ..., EBSi), que les signaux de sortie (Smi) des dispositifs pour la modulation d'étalement (EBS1, ..., EBSi) situés dans une bande de fréquences commune sont appliqués à un dispositif sommateur (SUBS) dont le signal de sortie est appliqué à un dispositif émetteur (SBS), que, dans le sens allant des postes radio mobiles (MS) vers le poste radio fixe (BS), les signaux de messages provenant respectivement d'une source de messages (NQMS) associée à l'un des postes radio mobiles (MS), sont chaque fois appliqués à un dispositif émetteur (SMS) situé dans le poste radio mobile (MS) par l'intermédiaire d'un modulateur (MMS), et que les signaux de sortie des dispositifs émetteurs (SMS) des postes radio mobiles (MS) sont situés dans des canaux de fréquences à bande étroite séparés les uns des autres.

15. Dispositif suivant la revendication 14, caractérisé en ce que le dispositif pour la modulation d'étalement (par exemple EBSi) contient, conformément au nombre M d'étages du signal de message, également M générateurs de signaux (SG1, ..., SGM) qui produisent divers signaux périodiques (S1i, ..., SMi) et qu'en fonction de l'étage de signal instantané m (m = 1, ..., M), un commutateur (U) connecté aux M générateurs de signaux (SG1, ..., SGM) est piloté d'une manière telle qu'à sa sortie se présente le signal de sortie (Smi) associé à l'étage de signal m qui est appliqué à la sortie du dispositif pour la modulation d'étalement (EBSi).

FIG.1

FIG.2